# FASCICULE DE BREVET EUROPEEN

(11) **EP 0 593 368 B1**
(45) Date de publication et mention de la délivrance du brevet: **09.12.1998**
(21) Numéro de dépôt: 93402549.5
(22) Date de dépôt: 15.10.1993
(51) Int. Cl.: C08B 37/00

(54) **Procédé de préparation d'un polymère soluble hypocalorique du glucose**
Verfahren zur Herstellung von hypokalorischem, löslichen Polymerisat von Glukose
Process for preparing a hypocaloric soluble glucose polymer

(30) Priorité: 16.10.1992 FR 9212447
(43) Date de publication de la demande: 20.04.1994
(73) Titulaire: Roquette Frères, 62136 Lestrem (FR)
(72) Inventeur: Duflot, Pierrick, F-62136 Richebourg (FR)
(74) Mandataire: Boulinguiez, Didier

(56) Documents cités:
- EP-A- 0 368 451
- WO-A-92/12179
- WO-A-92/14761
- CHEMICAL ABSTRACTS, vol. 113, no. 23, 1990, Columbus, Ohio, US; abstract no. 210343, 'Enzymic hydrolysis of polydextrose' & DENPUN KAGAKU vol. 36, no. 4 , 1989 , JP pages 283 - 286 T. KOBAYASHI ET AL.

## Description

La présente invention est relative à un procédé de préparation d'un polymère soluble hypocalorique du glucose dans lequel prédominent les liaisons 1-6, qui est stable à la chaleur et qui est inodore, incolore et sans saveur.

D'autres caractéristiques et avantages apparaîtront à la lecture de la présente description.

Le glucose, éventuellement mélangé à des polyols, peut être polymérisé à chaud en présence d'acides minéraux ou carboxyliques selon des procédés qui ont déjà été décrits par exemple dans les brevets américains n° 2.436.967, 2.719.179 et 4.965.354 pour ce qui concerne les acides minéraux ou n° 3.766.165 et 5.051.500 pour ce qui concerne les acides carboxyliques.

Les polyglucoses solubles obtenus, composés majoritairement de liaisons 1-6 et de liaisons atypiques 1-2, 1-3 sont peu digestibles.

Leur faible valeur calorique, dont on s'accorde à penser qu'elle est voisine de 4,18 KJoule/g (soit 1 Cal/ gramme), et leurs propriétés technologiques voisines de celles du saccharose en font des prétendants au remplacement de ce sucre en tant qu'agents de charge, produits inertes pour lesquels l'absence totale de goût sucré peut même s'avérer être un avantage.

Toutefois, les polymères ainsi obtenus présentent de nombreux inconvénients qui ne leur permettent pas de trouver un emploi aussi universel que possible en tant qu'agent de charge dans les produits alimentaires.

Un tel agent de charge idéal se doit en effet d'être totalement neutre du point de vue du goût, c'est-à-dire qu'il ne doit être ni acide, ni salé, ni amer, ni sucré, il doit être aussi totalement incolore, être aussi peu calorique possible, non cariogène, être stable à la chaleur, et ne pas générer de réactions de Maillard donnant naissance à des composés bruns en présence de protéines ou d'acides aminés.

On a donc mis au point des procédés visant à obtenir des produits dont le comportement se rapprocherait de cet agent de charge idéal. Toutefois, aucun de ces procédés n'a permis d'obtenir à ce jour de produit présentant toutes les qualités requises.

C'est ainsi qu'il a été proposé par le brevet américain 3.766.165, pour diminuer la coloration des polyglucoses lors de leur formation, d'ajouter au glucose un polyol alimentaire tel que le sorbitol, qui s'incorpore d'ailleurs en grande partie au polyglucose qui se forme. Les produits ainsi obtenus sont connus et commercialisés sous l'appellation de "Polydextrose".

Toutefois, ces produits sont encore fortement colorés et ne sont pas stables à la chaleur. Ils sont en outre toujours amers et soit acides, soit salés. Ils ne sont pas aussi peu caloriques que possible puisqu'ils contiennent encore du glucose et du sorbitol qui n'ont pas réagi, ainsi que des composés dont la faible masse moléculaire entraîne des inconvénients dans certaines applications particulières.

Ces produits de faible masse moléculaire sont en effet peu viscosifiants et n'exercent pas de fonction de charge : ils manquent de corps. D'autre part, ils sont hygroscopiques et abaissent très fortement l'humidité relative d'équilibre (HRE) des compositions qui les contiennent. Certains de leurs produits de dégradation comme par exemple le lévoglucosan sont en outre très amers.

On a donc proposé par le brevet américain 4.622.233 de traiter le polydextrose obtenu selon le brevet précédent, qui est donc un copolymère de glucose, de sorbitol et d'acide citrique par des agents oxydants pour diminuer sa coloration et de le précipiter par des solvants organiques pour en éliminer une partie des monomères et du lévoglucosan. Le produit obtenu n'est toutefois pas stable à la chaleur puisqu'il se recolore facilement et il n'est pas dénué de toute amertume. Il contient encore en outre des composés de faible masse moléculaire dont on a déjà signalé les inconvénients.

La demande de brevet européen n° 289.461 propose également de traiter le polydextrose par des solvants organiques afin de le purifier et de le décolorer mais conduit aussi à un produit possédant les mêmes inconvénients que ceux qui ont été signalés dans le paragraphe précédent.

La demande de brevet européen n° 342.156 propose d'éliminer les composés de faible masse moléculaire : glucose, sorbitol, acide citrique, anhydroglucose, hydroxyméthyl furfural par osmose inverse. Le produit obtenu est toutefois très coloré car les colorations sont dues à des composés de forte masse moléculaire qui ne sont pas éliminés par la membrane et ce produit n'est pas stable à la chaleur.

La demande de brevet européen n° 380.248 propose de traiter le polydextrose par des résines adsorbantes ou anioniques faibles de façon à abaisser sa teneur en acide citrique libre et estérifié et prétend ainsi en améliorer le goût. Le produit obtenu contient toutefois toujours des composés de faible masse moléculaire, et n'est pas dénué de toute amertume ; il est encore coloré et n'est pas stable à la chaleur.

La demande de brevet européen n° 458.748 propose un procédé similaire au précédent et conduit aussi à un produit présentant les mêmes inconvénients.

La demande de brevet européen n° 473.333, par un procédé mettant en oeuvre plusieurs résines de fonctionnalités différentes, prétend abaisser à la limite de la détection les teneurs résiduelles en acide citrique libre et estérifié du polydextrose et affirme obtenir un produit d'amertume réduite. Mais le produit obtenu contient toujours des composés de faible masse moléculaire, est encore coloré, et n'est toujours pas stable à la chaleur.

La demande de brevet PCT WO 92/12179, par un procédé de tamisage moléculaire sur résines cationiques retenant les petites molécules, permet d'obtenir un produit similaire à celui que permet d'obtenir le procédé selon la demande de brevet européen n° 342.156. Mais tout comme dans cette demande de brevet européen, les matières colorées ne sont pas séparées du polymère de glucose et le produit obtenu n'est pas stable à la chaleur. En outre, il est bien connu que pour être efficaces, de tels procédés de tamisage moléculaire par chromatographie doivent être mis en oeuvre à des températures élevées de façon à limiter les contraintes diffusionnelles au coeur des grains de l'adsorbant formé par les résines. Ceci permet d'abaisser la viscosité des solutions, et cet abaissement de la viscosité permet, à pertes de charges égales, soit d'augmenter la matière sèche des sirops à chromatographier, soit d'augmenter leur débit au sein de l'installation. Toutefois l'instabilité à la chaleur du polydextrose soumis à la chromatographie ne permet pas de pratiquer cette purification à des températures supérieures à 50°C et, même dans ces conditions, le produit obtenu est plus coloré que le produit soumis à purification.

La demande de brevet européen n° 368 451 propose d'obtenir un polymère hypocalorique du glucose en hydrolysant enzymatiquement une pyrodextrine, en chromatographiant éventuellement le produit d'hydrolyse obtenu de façon à en éliminer au maximum le glucose et le maltose puis optionnellement enfin en procédant à son hydrogénation.

Cependant, dans les pyrodextrines, les liaisons 1-6 ne sont pas prédominantes et les produits sont très susceptibles à l'action des amyloglucosidases. Il en résulte que la fraction non hydrolysable de la pyrodextrine ne représente qu'une faible partie seulement de cette pyrodextrine, inférieure même à 50 %, et que par conséquent le polymère hypocalorique qui peut être extrait par chromatographie ne peut être fabriqué avec un bon rendement. En outre, dans le procédé proposé, la chromatographie ne peut pas non plus être mise en oeuvre à des températures élevées sinon on obtient un polymère hypocalorique très coloré qui devient extrêmement difficile à hydrogéner car ces colorations empoisonnent rapidement le catalyseur.

La demande de brevet PCT 92/14761 propose un polydextrose ne contenant que peu de groupements de glucose réducteurs. Un tel produit est obtenu notamment par hydrogénation catalytique d'une solution de polydextrose d'un pH compris entre 3 et 9, à une température d'environ 20 à 200°C sous une pression d'hydrogène comprise entre 3,5 et 200 bars. Le produit obtenu est peu coloré et il est stable à la chaleur. Il n'est malheureusement pas aussi peu calorique que possible et contient encore des molécules lui conférant une certaine amertume comme l'anhydroglucose ou des esters d'acide citrique, ainsi que des produits de faible poids moléculaire tels que le sorbitol, le maltitol, etc, qui lui confèrent un goût sucré et qui sont peu viscosifiants et abaissent très fortement l'humidité relative d'équilibre des produits obtenus.

Aucun des procédés cités ci-dessus ne permet donc d'obtenir à partir de glucose un agent de charge idéal qui soit :
- en ce qui concerne ses propriétés organoleptiques :
   . aussi peu sucré que possible,
   . incolore,
   . sans saveur.
- en ce qui concerne ses propriétés physiques :
   . aussi peu hygroscopique que possible,
   . visqueux,
   . développant un fort effet de corps,
   . ayant des températures de transition vitreuse élevées,
   . possédant un très fort pouvoir anticristallisant,
   . stable à la chaleur.
- en ce qui concerne ses propriétés chimiques :
   . qui ne donne pas naissance à des réactions de Maillard,
   . qui ne soit ni oxydable, ni réductible, ni hydrolysable dans les conditions habituelles d'emploi des agents de charge.
- en ce qui concerne ses propriétés physiologiques :
   . qui ne développe pas de pression osmotique intraluminale élevée de façon à ne pas provoquer de diarrhées osmotiques,
   . qui ait une fermentescibilité très réduite de façon à n'être ni calorique ni cariogène et à posséder un effet "fibres" important sur l'intestin.

Et ce n'est qu'au terme d'un travail long et difficile, dont il semblait bien qu'il ne permettrait jamais d'aboutir au produit idéal décrit ci-dessus, que la société demanderesse est cependant parvenue à mettre au point le procédé selon la revendication 1. Ce procédé permet d'obtenir un polymère soluble de glucose composé majoritairement de liaisons 1-6, caractérisé par le fait qu'il ne possède pratiquement pas de pouvoir réducteur et que son contenu en produits de masse moléculaire inférieure ou égale à 182 est extrêmement faible.

La présente invention a ainsi pour objet un procédé de préparation d'un polymère soluble de glucose, caractérisé par le fait que l'on soumet un polymère de glucose composé majoritairement de liaisons 1-6 à une étape d'hydrogénation puis à une étape de tamisage moléculaire, afin d'éliminer les produits de masse moléculaire inférieure ou égale à 182. Ce procédé permet d'obtenir un polymère soluble de glucose composé majoritairement de liaisons 1-6, caractérisé par le fait qu'il présente une teneur en sucres réducteurs inférieure à 0,5 % en poids, de préférence inférieure à 0,25 % et plus préférentiellement encore inférieure à 0,15 %, ainsi qu'une teneur en produits de masse moléculaire inférieure ou égale à 182 inférieure à 1 %, de préférence inférieure à 0,75 %, et plus préférentiellement encore inférieure à 0,50 %.

La teneur en sucres réducteurs est exprimée en glucose, en poids par rapport au poids sec de produit analysé, et elle est mesurée par la méthode de BERTRAND.

La teneur en produits de masse moléculaire inférieure ou égale à 182 est exprimée quant à elle en pourcentage en poids sur le produit sec analysé et est mesurée par dosage enzymatique ou par dosage chimique, ainsi que cela sera expliqué dans les exemples.

Par polymère de glucose composé majoritairement de liaisons 1-6, on entend les polymères de condensation qui se forment essentiellement à partir du glucose sous l'action combinée de la chaleur et d'acides ou de catalyseurs acides, ou de sels dans des milieux à faible teneur en eau. Les dextrans, obtenus par fermentation microbienne du saccharose et composés essentiellement de liaisons glucose α 1-6 glucose, sont par conséquent exclus de cette invention.

De tels polymères ont été maintes fois décrits et peuvent être obtenus par des procédés tels que ceux décrits notamment dans les brevets US 2 436 967, 3 766 165, 4 965 354, 5 051 500.

Des polymères de glucose actuellement commercialisés sont obtenus à partir de glucose et d'acide citrique. De façon plus précise, ils sont obtenus par chauffage et fusion de dextrose (glucose cristallisé) en présence de 5 à 15 % de sorbitol également fondu et de 0,5 à 3 % en moles d'acide citrique. Ce mélange fondu est alors maintenu à une température comprise entre 140 et 195°C sous pression réduite de façon à en éliminer au fur et à mesure l'eau qui se forme au cours de la polymérisation.

Un tel polymère soluble de glucose est un article courant dans le commerce, connu plus généralement sous la dénomination de "Polydextrose". Une qualité actuellement présente sur le marché est commercialisée par la société PFIZER sous la marque LITESSE.

Ces polymères de glucose possèdent un pouvoir réducteur qui, exprimé en Dextrose Equivalent (D.E.), est compris entre environ 6 et environ 15. Ce pouvoir réducteur est dû à la présence de glucose libre et d'extrémités réductrices hémiacétaliques présentes en bout de chaîne du polymère. Ils contiennent également de l'acide citrique, du sorbitol qui n'a pas réagi (le glucose, le sorbitol et l'acide citrique ayant tous trois une masse moléculaire inférieure ou égale à 182). On y trouve aussi environ 4 % de lévoglucosan et des esters d'acide citrique qui confèrent un goût amer à ces produits.

On peut signaler que dans le cas du produit LITESSE, les teneurs en acide citrique libre et estérifié ont été diminuées par traitement particulier sur des résines échangeuses d'ions.

D'autres polymères du glucose, qui ne sont pas commercialisés à la connaissance de la Demanderesse mais qui sont préférés comme matière première dans le cadre du procédé selon l'invention, sont obtenus de façon beaucoup plus économique en procédant plus simplement à la condensation du glucose en présence d'acide minéral en quantités catalytiques au lieu d'un acide polycarboxylique. Ces polymères peuvent éventuellement être obtenus en pratiquant la condensation du glucose en présence de sorbitol mais la Société Demanderesse a remarqué que cette manière de faire n'était pas nécessaire bien que les polymères sans sorbitol obtenus dans ces conditions présentent une coloration et un goût beaucoup plus prononcés que ceux obtenus à partir de glucose, de sorbitol et d'acide citrique.

Ces polymères de glucose, de préférence obtenus sans emploi de sorbitol, possèdent eux aussi un pouvoir réducteur compris entre environ 6 et environ 15. Ce pouvoir réducteur est également dû à la présence de glucose libre et d'extrémités réductrices hémiacétaliques présentes en bout de chaîne du polymère. On y trouve également du lévoglucosan et d'autres produits de dégradation du glucose.

Ces polymères sont commodément obtenus par chauffage et fusion de dextrose (glucose cristallisé) en présence de 5 à 500 parties par million en poids d'acide sulfurique. Ce mélange fondu est alors maintenu à une température comprise entre 140 et 195°C sous pression réduite jusqu'à l'obtention d'un DE compris entre environ 6 et 15.

Selon la présente invention, le procédé d'obtention du polymère soluble de glucose est caractérisé par le fait que l'on soumet un polymère de glucose composé majoritairement de liaisons 1-6 à une étape d'hydrogénation puis à une étape de tamisage moléculaire, notamment sur membranes ou par chromatographie sur des matériaux adsorbants, afin d'éliminer les molécules de masse moléculaire inférieure ou égale à 182.

Grâce à ces deux étapes combinées d'hydrogénation et de tamisage moléculaire, on obtient ainsi un produit stable à la chaleur et qui présente une saveur, une coloration et un goût satisfaisants.

L'étape d'hydrogénation est effectuée avant l'étape de tamisage moléculaire, ce qui présente des avantages sensibles en dépit du fait que la quantité de matière à hydrogéner soit alors plus importante. En effet, lorsque le tamisage moléculaire est effectué sur le polymère de glucose préalablement hydrogéné, ne possédant donc plus ou essentiellement plus de pouvoir réducteur, il s'ensuit que non seulement le tamisage moléculaire est effectué sur un produit déjà décoloré par l'hydrogénation mais qu'en plus les conditions de température nécessaires à l'obtention d'un fractionnement efficace deviennent sans effet sur le produit à fractionner. Autrement dit, dans ces conditions, le tamisage moléculaire n'entraîne plus aucune dégradation du produit, notamment en ce qui concerne la formation de produits colorés ou amers et l'élimination de ces produits de dégradation déjà présents s'avère tout aussi efficace.

Selon une réalisation préférentielle du procédé conforme à l'invention, on soumet, préalablement aux étapes d'hydrogénation et de tamisage moléculaire, le polymère de glucose composé majoritairement de liaisons 1-6 à une hydrolyse à l'aide d'enzymes susceptibles de dégrader les liaisons glucose-glucose.

De préférence, lesdites enzymes sont constituées par l'α-amylase, l'amyloglucosidase et/ou les enzymes capables d'hydrolyser les liaisons α 1-6 de l'amidon, telles que l'isoamylase ou la pullulanase.

Lorsque l'hydrogénation est effectuée sur un polymère de glucose obtenu par catalyse de la condensation du glucose en présence de sorbitol à l'aide d'acide citrique, tel que le polydextrose, on préfère procéder à l'hydrogénation en milieu alcalin puisque dans ce cas la société demanderesse a remarqué que l'on obtenait un polymère soluble hypocalorique de glucose de saveur extrêmement neutre. En effet, le pH légèrement alcalin conjugué d'une part à la température élevée à laquelle se déroule l'hydrogénation et d'autre part à l'environnement très réducteur, permet d'hydrolyser, sans colorer le polymère, les liaisons esters liant l'acide citrique avec ce polymère.

L'hydrolyse de ces liaisons permet de détruire les esters de l'acide citrique et ainsi de désamériser au maximum le polymère. Une telle hydrolyse alcaline n'est cependant pas réalisable en dehors des conditions de l'hydrogénation car on obtiendrait alors un polymère extrêmement dégradé et coloré.

L'hydrolyse enzymatique préalable des polymères de glucose présentant majoritairement des liaisons 1-6 permet d'obtenir des polymères solubles du glucose conformes à l'invention particulièrement peu caloriques, peu digestibles et peu cariogènes. Afin de réaliser l'hydrolyse enzymatique, le polymère de glucose est mis en solution dans de l'eau à une matière sèche d'environ 20 à 70 %, de préférence de 20 à 45 %, afin de subir l'hydrolyse, de préférence à l'aide d'au moins une enzyme saccharifiante telle que l'amyloglucosidase.

De façon plus préférentielle, et bien que cela ne soit pas nécessaire dans tous les cas, on peut faire précéder cette action enzymatique de l'amyloglucosidase par l'action d'une alpha amylase. De même, on peut faire suivre ou accompagner le traitement de saccharification par l'action d'une alpha amylase et/ou d'une pullulanase.

Les quantités et les conditions d'action des différentes enzymes éventuellement utilisées pour l'hydrolyse enzymatique préalable des polymères sont choisies parmi les suivantes :
- amyloglucosidase : 4 000 à 400 000 unités internationales par kilogramme de substrat sec, température de 50°C à 60°C, durée d'action de 30 à 72 heures, pH de 5,0 à 6,0.
- alpha amylase : 20 à 2 000 u KNU (kilo Novo Units) par kilogramme de substrat sec, température de 50°C à 60°C, durée d'action de 16 à 30 heures.
- pullulanase : 150 à 15 000 unités ABM.

Les enzymes utilisées peuvent être d'origine bactérienne ou fongique.

Dans le cadre de la présente invention, l'hydrogénation du polymère de glucose dans lequel prédominent les liaisons 1-6, ayant éventuellement subi une hydrolyse enzymatique et ayant éventuellement subi un tamisage moléculaire, est effectuée de manière connue en soi par hydrogénation en présence de nickel de RANEY ou par hydrogénation en présence de métaux nobles.

Cette hydrogénation est de préférence effectuée après purification de la matière première par exemple par traitement sur du charbon activé avant ou après déminéralisation sur résines échangeuses d'ions. L'hydrogénation peut être effectuée par exemple en présence de nickel de RANEY, à une température de 130 à 140°C, sous une pression d'hydrogène d'environ 50 bars.

L'hydrogénation est généralement conduite jusqu'à l'obtention d'un pourcentage de sucres réducteurs résiduels inférieur à 0,5 %, de préférence inférieur à 0,25 % et plus préférentiellement encore inférieur à 0,15 % de la matière sèche.

De façon générale, le tamisage moléculaire est effectué sur un sirop préalablement filtré puis déminéralisé et concentré jusqu'à une matière sèche pratiquement comprise entre 20 et 60 %, de préférence entre 25 et 55 %.

Ce tamisage moléculaire, réalisé de préférence par fractionnement chromatographique, est effectué de manière connue en soi, de façon discontinue ou continue (lit mobile simulé), sur des adsorbants du type résines cationiques, ou sur des zéolithes fortement acides, chargées préférentiellement à l'aide d'ions alcalins ou alcalino terreux tels que le calcium et le magnésium mais plus préférentiellement à l'aide d'ions sodium.

Des exemples de tels procédés sont décrits notamment dans les brevets US 3 044 904, 3 416 961, 3 692 582, FR 2 391 754, 2 099 336, US 2 985 589, 4 024 331, 4 226 977, 4 293 346, 4 157 267, 4 182 633, 4 332 623, 4 405 455, 4 412 866, 4 422 881 et WO 92/12179. Selon un mode de réalisation préféré, le fractionnement chromatographique est réalisé en employant le procédé et appareillage décrits dans le brevet américain n° 4 422 881 dont la société demanderesse est titulaire. Quel que soit le procédé chromatographique retenu, on a recours de préférence en ce qui concerne l'adsorbant, à une résine cationique forte employée sous forme sodium et réticulée avec environ 4 % à 10 % de divinylbenzène. Les résines sont avantageusement de granulométrie homogène et comprise entre 100 et 800 micromètres.

Le choix des paramètres du fractionnement chromatographique, parmi lesquels on note plus particulièrement le débit d'élution, le débit d'alimentation en polymère de départ, éventuellement préalablement hydrogéné et éventuellement hydrolysé, le débit d'extraction de la fraction contenant le polymère soluble hypocalorique, le débit de la fraction contenant les impuretés de faible poids moléculaire et la composition des zones de désorption, d'adsorption et d'enrichissement est expliqué et illustré dans les exemples.

Le choix de ces paramètres est effectué de telle manière que la fraction Xl contenant le polymère soluble de glucose ait une teneur en produits de masse moléculaire inférieure ou égale à 182 extrêmement faible, et en pratique inférieure à 1 %, de préférence à 0,75 %, et plus préférentiellement encore à 0,5 %.

Pour parvenir à ce résultat, ces paramètres sont choisis comme suit quand le fractionnement chromatographique est réalisé en utilisant les procédé et appareillage décrits dans le brevet US 4 422 881 et quand l'adsorbant utilisé est une résine cationique de faible granulométrie réticulée à 8 % de divinylbenzène et qu'elle est utilisée sous forme sodium :
- débit d'élution de 70 à 700 1/h/m3 d'adsorbant,
- débit d'alimentation en polymère de départ, éventuellement hydrogéné et éventuellement hydrolysé, de 10 à 100 1/h/m3 d'adsorbant,
- débit d'extraction de la fraction contenant le polymère soluble de glucose de 80 à 800 1/h/m3 d'adsorbant (fraction X1),
- débit d'extraction de la fraction X3, constituée essentiellement d'eau, d'hydroxyméthylfurfural et de lévoglucosan (très adsorbé sur les résines) : 80 à 800 1/h/m3 d'adsorbant,
- débit de la fraction contenant les impuretés de faible poids moléculaire de 20 à 200 1/h/m3 d'adsorbant (fraction X2).

L'étape de fractionnement chromatographique aboutissant au polymère soluble de glucose amène la production conjointe de la fraction X2, fortement enrichie en glucose ou en sorbitol, en lévoglucosan, et contenant également des oligosaccharides de faible degré de polymérisation. Cette fraction X2 contient la plus grande partie du lévoglucosan qui a été éliminé du polymère. On retrouve aussi une autre partie de ce lévoglucosan dans la fraction X3 précédant à chaque cycle la sortie du polymère soluble de glucose contenu dans la fraction X1. Cette fraction X3 contient aussi de l'hydroxyméthylfurfural ou ses dérivés hydrogénés très fortement adsorbés par les résines et qui ont donc aussi été éliminés du polymère purifié.

La fraction X2 contenant essentiellement les impuretés de faible poids moléculaire telles que le glucose, le sorbitol et le lévoglucosan, est de préférence extraite à un débit tel que la matière sèche qui y est contenue ne représente pas plus de 20 % de la matière sèche entrant dans le système chromatographique, ce qui garantit alors un rendement d'extraction du polymère soluble de glucose supérieur à 80 % du polymère réellement présent dans le sirop à purifier.

Grâce au procédé conforme à l'invention, qui tire profit des bénéfices obtenus à fois par l'hydrogénation et par le tamisage moléculaire, il est possible d'obtenir un polymère soluble hypocalorique du glucose dans lequel prédominent les liaisons 1-6, et dont les propriétés organoleptiques, physiques, chimiques, physiologiques sont sans commune mesure avec celles des produits de cette gamme qui existent déjà mais dont le développement a toujours été limité par leurs défauts intrinsèques, déjà évoqués précédemment.

La description des quelques exemples qui suivent permettront de mieux comprendre en quoi consiste réellement l'invention. Ils ne sont toutefois donnés ici qu'à titre illustratif et ne sauraient constituer une limitation aux seuls produits et procédés proposés, qui représentent en ce domaine une avancée technologique significative.

### EXEMPLE 1

Du polydextrose A de PFIZER, dont l'analyse chimique est la suivante (en % de la matière sèche) :
Dextrose Equivalent : 8,7
glucose libre : 3,5
glucose total : 85,8
sorbitol libre : 1,7
sorbitol total : 9,3
acide citrique libre : 0,6
acide citrique total : 1,1
lévoglucosan : 2,8
est dissous dans l'eau à une matière sèche de 30 %. Le pH du sirop obtenu est ajusté à 5,5 à l'aide d'une solution de soude, puis ce sirop est divisé en cinq lots a, b, c, d, e, tous portés à 55°C et dans lesquels on introduit :
- lot a :: 1,5 °/.. d'amyloglucosidase AMIGASE TS 300 de GIST et 1,5 °/.. d'alpha amylase TERMAMYL 120 L de NOVO
- lot b :: 1,5 °/.. d'amyloglucosidase AMIGASE TS 300 de GIST 1,5 °/.. d'alpha amylase TERMAMYL 120 L de NOVO 2 °/.. de pullulanase PULLUZYME 750 L de ABM
- lot c :: 1 % d'alpha amylase fongique M.K.C LF 40 de MILES
- lot d :: 1 % d'alpha amylase fongique M.K.C. LF 40 de MILES 2 °/.. de pullulanase PULLUZYME 750 L de ABM
- lot e :: rien.

Les pourcentages indiqués ci-dessus sont exprimés en poids d'enzyme commerciale par rapport au poids de polymère sec.

Après 24 heures d'hydrolyse enzymatique ou de maintien en température, on acidifie les lots à pH 3,5 et on les chauffe à 80°C pour dénaturer les enzymes. Tous ces sirops sont ensuite purifiés de façon classique par traitement au noir et déminéralisation sur résines cationiques et anioniques pour donner des sirops colorés et possédant un goût amer.

Sur les sirops obtenus, on procède à l'analyse :
- de l'acide citrique libre à l'aide du kit BOEHRINGER réf. 139076,
- de l'acide citrique total par la même méthode, mais après avoir réalisé une saponification dans les conditions suivantes : à 5 ml d'échantillon, on ajoute 25 ml de soude 0,5 N ; on agite pendant 30 minutes à température ambiante puis on neutralise à pH 7-8 avec de l'HCl N ; on ajuste alors le volume total à 50 ml pour doser l'acide citrique total,
- du glucose à l'aide du kit, BOEHRINGER réf. 716 251
- du sorbitol, par la méthode à la sorbitol deshydrogénase publiée dans "Methods of enzymatic analysis "BERGMEYER - Hans Ulrich Editor 1965 - VERLAG CHEMIE GmbH, ACADEMIC PRESS - p 167 à 170,
- du 5-HMF par chromatographie liquide à haute performance sur colonne H⁺ et détecteur UV à 283 nm,
- du lévoglucosan par chromatographie gazeuse en colonne capillaire, par l'intermédiaire de son dérivé au bisilyltrifluoroacétamide avec le méthyl alpha D glucoside comme étalon interne.

L'analyse obtenue est la suivante pour ce qui concerne les teneurs en glucose et sorbitol libres.

| Lot | a | b | c | d | e |
|---|---|---|---|---|---|
| glucose libre | 5,1 | 5,2 | 6,7 | 7,3 | 3,5 |
| sorbitol libre | 1,7 | 1,7 | 1,7 | 1,7 | 1,7 |
| Dextrose Equivalent | 8,9 | 9,0 | 10,5 | 11,1 | 8,0 |

Une première partie du lot e a été concentrée à 70 % de matières sèches puis a été atomisée pour fournir une poudre jaune (produit A).

Les lots d et une autre partie du lot e ont ensuite été soumis à l'hydrogénation catalytique dans les conditions suivantes : température 140°C durée 6 heures, catalyse par nickel de RANEY, pression d'hydrogène 50 bars, concentration 30 %, pH 8,0. Après filtration du catalyseur et élimination des sels sur résines cationiques et anioniques, on a obtenu des sirops incolores de goût sucré et possédant encore une légère amertume.

Le lot e hydrogéné a été concentré à 70 % de matières sèches puis a été atomisé pour fournir une poudre jaunâtre (produit B).

Leur teneur en sorbitol libre s'élevait pour le lot d à 9,7 % et pour le lot e à 5,7 %.

La teneur en sucres réducteurs de ces sirops est de 0,05 % et leur teneur en acide citrique total est inférieure à 0,07 %, limite de détection de la méthode d'analyse. La teneur en lévoglucosan est demeurée inchangée et est égale à 2,8 %.

Pour le sirop hydrogéné d, la teneur en produits de masse moléculaire inférieure ou égale à 182 est de 12,5 % (c'est-à-dire 9,7 % de sorbitol libre et 2,8 % de lévoglucosan), et elle est de 8,5 % pour le sirop hydrogéné e (5,7 % de sorbitol libre et 2,8 % de lévoglucosan).

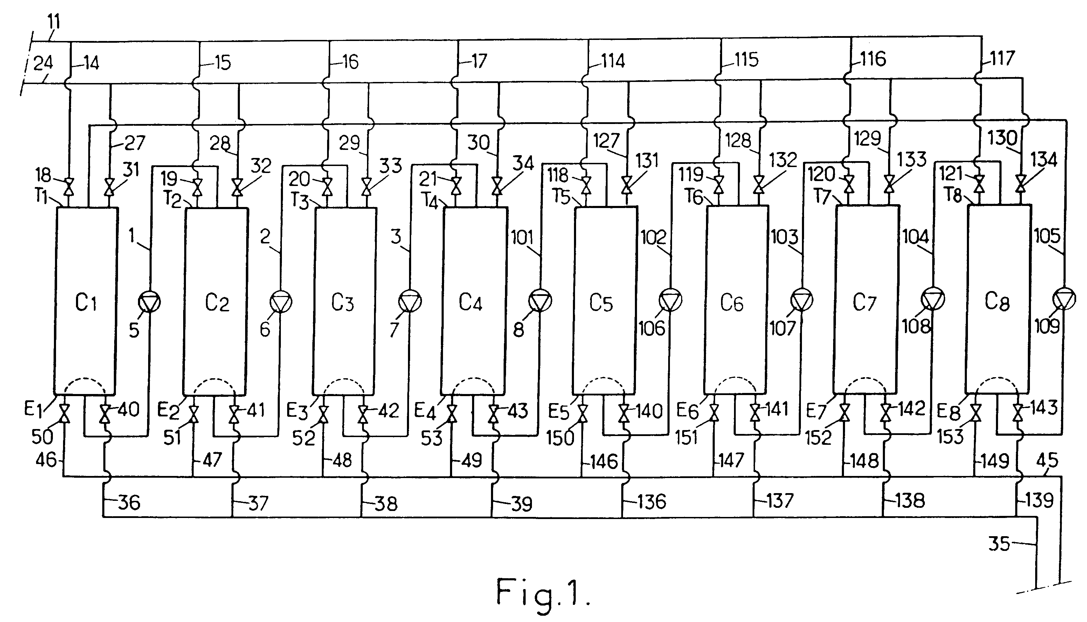

Le fractionnement du polydextrose hydrogéné correspondant aux lots d et e a été effectué dans l'installation de séparation chromatographique continue dont les détails de construction et de fonctionnement sont décrits dans le brevet américain US 4 422 881, ces détails n'étant repris que pour ce qui est nécessaire à la compréhension du procédé. Cette installation comprend, comme montré à la Figure 1 du brevet américain (reprise ici en tant que Figure 1 et pour l'explication détaillée de laquelle on se référera audit brevet américain), huit colonnes ou étapes C1 à C8 de 200 litres chacun, remplis de résine cationique forte sous forme sodium et d'une granulométrie comprise entre 180 et 280 micromètres du type PCR 732 de PUROLITE.

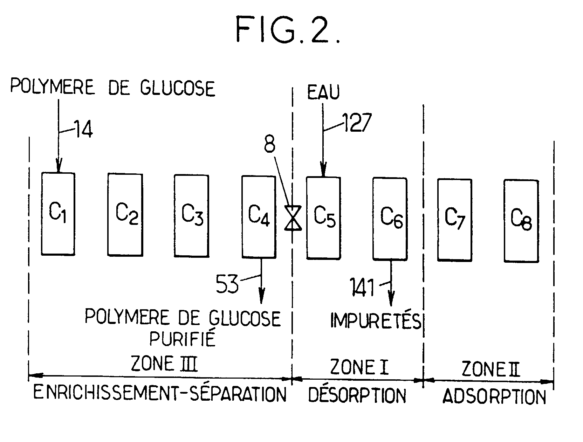

De par le calage des électrovannes, on établit dans cette installation une zone I de désorption de deux étages, une zone II d'adsorption de deux étages, et une zone III d'enrichissement et de séparation du polydextrose hydrogéné relativement moins adsorbé et des composés de faible poids moléculaire relativement plus adsorbés de quatre étages comme montré sur la Figure 2 qui est une représentation schématique de l'installation de la Figure 1 et sur laquelle on n'a fait figurer que :
- les colonnes C1 à C8,
- le dispositif de fermeture, en l'occurrence l'électrovanne 8,
- les canalisations d'alimentation en eau et en polydextrose hydrogéné à fractionner, contenant des produits de faible masse moléculaire, montrées respectivement en 127 et 14,
- la canalisation 141 d'extraction d'impuretés de faible poids moléculaire du type sorbitol, lévoglucosan, glucose (fraction X2),
- et la canalisation 53 d'extraction du polymère soluble de glucose purifié selon l'invention (fraction X1).

Le dispositif de fermeture 8 maintient, dans la configuration adoptée, une étanchéité totale entre, d'une part, la zone III, qui est une zone d'enrichissement à l'extrémité de laquelle est récupéré le polymère de glucose purifié et, d'autre part, la zone I de désorption des impuretés constituées essentiellement de sorbitol, glucose et de lévoglucosan, zone en tête de laquelle est introduite l'eau de désorption.

Ce dispositif de fermeture assure le sens du passage de la phase liquide sur l'adsorbant sélectif. Une minuterie ajustée à 1 800 secondes assure, pour les débits indiqués dans le tableau 1, une alimentation en eau sur la première colonne de la zone I suffisante pour obtenir la désorption des impuretés à savoir essentiellement le sorbitol, le -glucose, le lévoglucosan, et l'hydroxyméthylfurfural, et une alimentation en un volume de polydextrose hydrogéné à purifier sur le premier étage de la zone III, compatible avec le volume d'adsorbant et sa capacité d'adsorption, de façon à obtenir un rendement d'extraction du polyglucose selon l'invention au moins égal à 80 % du polydextrose hydrogéné servant de matière première à la chromatographie. Au terme des 1 800 secondes, toutes les entrées et sorties, de même que le dispositif de fermeture 8, sont décalés d'un étage vers la droite.

Le susdit rendement d'extraction est maintenu constant en ajustant le débit de la pompe d'extraction, non montrée, des impuretés adsorbées. La sortie de la fraction X1, éventuellement précédée d'une fraction X3 contenant un peu de lévoglucosan et d'hydroxyméthylfurfural, très fortement adsorbés sur des résines de type sodium, s'effectue à pression atmosphérique. Son débit constant résulte de la différence entre les débits d'alimentation et le débit d'extraction.

Le polydextrose hydrogéné qui est introduit dans l'installation en tête de la zone d'enrichissement et de séparation III, présente une matière sèche voisine de 30 %.

La température à l'intérieur des colonnes de séparation est maintenue à environ 70°C.

La fraction X1 constituant le polymère soluble de glucose selon l'invention, est précédée d'une fraction X3 constituée essentiellement de lévoglucosan et de dérivés hydrogénés de l'hydroxyméthylfurfural à très faible concentration mais très forte richesse. Cette fraction d'impuretés est avantageusement éliminée durant les 15 premières minutes de chaque cycle, ce qui permet d'accroître fortement la concentration et la pureté des fractions de polymères solubles de glucose selon l'invention.

Le tableau 1 ci-après montre, pour les conditions de conduite de l'installation qui y sont indiquées, les richesses et concentrations obtenues pour les trois fractions X1, X2 et X3.

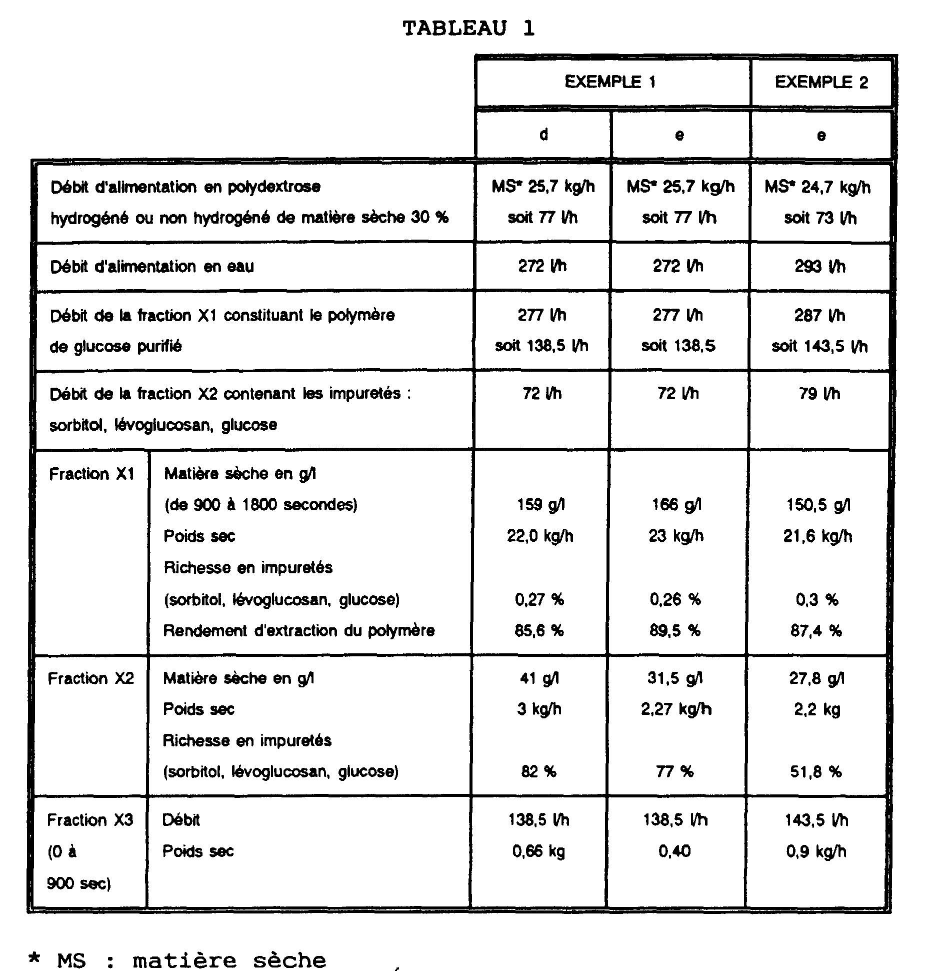

### EXEMPLE 2 (comparatif)

Une troisième partie du lot e obtenue à l'exemple précédent a été chromatographiée sans être hydrogénée préalablement.

Les conditions d'alimentation et d'extraction des fluides entrant et sortant du système chromatographique sont présentées dans le tableau 1. La température de séparation employée est de 65°C, la configuration des zones à l'intérieur du système est restée la même ainsi que le temps de 1800 secondes imposant le décalage vers la droite de toutes les entrées et sorties du système.

On constate que par rapport au produit hydrogéné, la séparation des impuretés (sorbitol, glucose, lévoglucosan) est plus difficile : le rendement d'extraction obtenu est un peu plus faible, et pour une même pureté du polymère de glucose, il faut charger moins le système chromatographique et employer davantage d'eau que dans le cas du produit "e" hydrogéné.

On constate en outre une très forte coloration de la fraction X1. Cette coloration qui existe déjà dans le produit à chromatographier s'accentue au cours de la chromatographie et se concentre dans cette fraction X1.

La fraction X1 obtenue est alors décolorée par traitement au noir puis déminéralisation sur résines cationiques et anioniques. Quoique ce traitement en améliore la couleur, les sirops résultants sont cependant davantage colorés qu'après la purification obtenue dans le cas de l'exemple 1 juste avant l'hydrogénation.

Une partie de la fraction X1 ainsi purifiée est concentrée à une matière sèche de 30 % puis est soumise à l'hydrogénation comme dans le cas de l'exemple 1.

Après 8 heures d'hydrogénation, on obtient un sirop qui, après déminéralisation, est incolore, sans saveur et qui contient 0,45 % de sucres réducteurs et 0,3 % de molécules de poids moléculaire inférieur ou égal à 182. Une autre partie de cette fraction X1 ainsi purifiée est concentrée à une matière sèche de 70 % puis est séchée par atomisation pour fournir une poudre jaunâtre (produit C).

Pour les deux exemples donnés, les conditions préférées pour la conduite du fractionnement chromatographique sont celles pour lesquelles la teneur en impuretés de poids moléculaire inférieur ou égal à 182 de la fraction X1 est inférieure à 1 %, de préférence inférieure à 0,75 % et encore plus préférentiellement inférieure à 0,50 %. Une telle richesse en produits de masse moléculaire inférieure ou égale à 182 permet d'obtenir un produit totalement neutre du point de vue du goût, c'est-à-dire ni acide, ni sucré, ni salé, ni amer ; totalement incolore, extrêmement peu calorique, non cariogène, stable à la chaleur, ne générant pas de réaction de Maillard, possédant une température de transition vitreuse et une HRE élevées, plus visqueux, et générant plus de corps que les produits de l'art antérieur.

Dans ces conditions, le rendement d'extraction du polymère soluble de glucose selon l'invention, que l'on peut exprimer comme étant le rapport du poids de polymère soluble extrait dans la fraction X1 par rapport au poids de polydextrose hydrogéné ou non contenu dans le sirop d'alimentation est supérieur à 80 %.

La fraction de polymère soluble de glucose selon l'invention peut ensuite être concentrée d'une façon connue de tout homme de l'art, par exemple sur des appareils à flot tombant fonctionnant sous vide, puis séchée par des procédés tels que l'atomatisation.

### EXEMPLE 3

Dans un réacteur en acier vitrifié muni d'un agitateur et d'une double enveloppe thermostable, on a introduit 500 kg de dextrose anhydre et 25 litres d'eau.

On a chauffé la double enveloppe jusqu'à dissolution complète du dextrose puis on a ajouté 10 grammes d'acide sulfurique préalablement dilué dans un peu d'eau. On a alors mis le réacteur sous vide et porté sa température jusqu'à 155°C en 8 heures pour obtenir un polymère soluble de glucose répondant à l'analyse suivante:
- dextrose équivalent : 11,9
- glucose libre : 5,2 %
- anhydroglucose : 0,89 %

La pâte ainsi obtenue, très brune et à forte odeur de caramel a été reprise dans de l'eau chaude pour en former une solution à 40 % environ de matières sèches.

Cette solution a été soumise ensuite à l'action d'une amyloglucosidase à l'aide de 25 000 unités internationales d'activité enzymatique par kilogramme de substrat sec, à une température de 55°C et à un pH de 5,5 durant 60 heures. Elle a été ensuite décolorée sur une colonne de noir granulaire puis déminéralisée sur une batterie de résines échangeuses d'ions comprenant en série une résine cationique forte puis une résine anionique forte et enfin un lit mélangé composé de résines cationiques et anioniques fortes.

Le sirop obtenu montrait alors l'analyse suivante :
- dextrose équivalent : 14,8
- glucose libre : 8,5 %
- anhydroglucose :0,9 %

On a procédé à son hydrogénation à la température de 140°C durant 6 heures à l'aide de nickel de Raney, sous une pression d'hydrogène de 50 bars à un pH de 7,0 et à la concentration de 30 %.

Après filtration du catalyseur et élimination des sels sur résines cationiques et anioniques fortes, on a obtenu un sirop incolore qui a été concentré à une matière sèche de 50 % pour subir la chromatographie dans les conditions qui ont été décrites dans l'exemple 1.

Ce sirop soumis à la chromatographie répondait à l'analyse suivante :
- sucres réducteurs : 0,12 %
- sorbitol : 8,8 %
- anhydroglucose :0,9 %

La fraction X1 recueillie après chromatographie, après un dernier passage sur un lit mélangé de résines cationiques et anioniques fortes a été concentrée à 70 % de matières sèches puis a été atomisée pour fournir une poudre de polymère selon l'invention, parfaitement blanche, incolore et sans aucune saveur ni odeur particulières.

Le produit obtenu (PRODUIT D) comportait moins de 0,2 % de sorbitol et pas d'autres impuretés détectables de poids moléculaire inférieur ou égal à 182.

### EXEMPLE 4

On a comparé dans ce qui suit les propriétés organoleptiques et physicochimiques des produits obtenus par le procédé selon l'invention avec ceux de l'art antérieur.

Pour ce faire on a retenu en tant que produits de l'art antérieur :
- le polydextrose A, déminéralisé sur résines et correspondant au produit commercialisé par la société PFIZER sous la marque LITESSE II,
- le même produit après hydrogénation catalytique (lot e de l'exemple 1),
- la fraction chromatographiée X1 obtenue à l'exemple 2 après chromatographie et purification mais avant hydrogénation catalytique
- le produit de l'exemple 3

Ces produits sont dénommés respectivement A, B, C, D ainsi qu'il a déjà été précisé dans les exemples précédents.

### a) Analyse chimique et aspect

L' analyse chimique et 1' aspect de ces produits en poudre ou en solution sont comparés dans le tableau 2 suivant :

**TABLEAU 2**

| | **A*** | **B*** | **C*** | **D** |
|---|---|---|---|---|
| **Dextrose équivalent** | 8,0 | 0,05 | 5,3 | 0,10 |
| **Glucose libre** | 3,5 | 0 | 0,3 | traces |
| **Sorbitol libre** | 1,7 | 5,7 | 0 | 0,2 |
| **Lévoglucosan** | 2,8 | 2,8 | traces | traces |
| **Polymère** | 92 % | 91,5 % | 99,7 % | 99,8 % |
| **Aspect de la poudre** | poudre jaune | poudre blanche | poudre jaune | poudre blanche |
| **Aspect en solution à 50 %** | jaune | jaunâtre | jaune | incolore |

| | | | | |
|---|---|---|---|---|
| *comparatif | | | | |

### b) Propriétés organoleptiques

Un panel de dégustateurs a qualifié de la façon suivante des solutions à 10 % de ces poudres dans de l'eau :
- produit A : amer, très légèrement sucré
- produit B : légèrement amer, légèrement sucré
- produit C : très légèrement amer, très légèrement sucré
- produit D : totalement neutre

### c) Viscosité en solution aqueuse

Des solutions aqueuses à 55 % de matières sèches ont été confectionnées à partir des produits A, B, C et D. Leur viscosité a été mesurée à 20°C à l'aide d'un viscosimètre BROOKFIELD. Les résultats obtenus sont les suivants :
- produit A : 86 centipoises
- produit B : 85 centipoises
- produit C : 106 centipoises
- produit D : 108 centipoises

Le produit D obtenu par le procédé selon l'invention est donc le plus visqueux et confère ainsi le maximum de corps ou d'onctuosité aux produits qui en contiennent.

### d) Activité de l'eau

On a mesuré l'activité de l'eau sur les mêmes solutions aqueuses à 55 % de matières sèches. Les résultats obtenus sont les suivants :
- produit A : 0,950
- produit B : 0,955
- produit C : 0,965
- produit D : 0,965

Les solutions aqueuses des produits ont donc une activité de l'eau qui est faible et n'abaissent pas exagérèment l'humidité relative d'équilibre des produits qui en contiennent.

### e) Stabilité à la chaleur

On a évalué la stabilité à la chaleur des produits A, B, C et D.

Pour ce faire, on a estimé la coloration à la cuisson obtenue lors de la fabrication de bonbons réalisés à l'aide de 50 % de maltitol cristallisé de haute pureté de la marque MALTISORB ^{R} commercialisé par la Demanderesse et de 50 % des produits A, B, C et D.

La cuisson a été effectuée à pression atmosphérique aux températures de 160 et 200°C.

On a obtenu les résultats suivants :

**TABLEAU 3**

| | **160° C** | **200° C** |
|---|---|---|
| **50 % produit A + 50 % MALTISORB**^{**R**} | jaune | marron |
| **50 % produit B + 50 % MALTISORB**^{**R**} | jaune pâle | jaune |
| **50 % produit C + 50 % MALTISORB**^{**R**} | jaune | marron |
| **50 % produit D + 50 % MALTISORB**^{**R**} | jaune très pâle | jaune pâle |

Le produit obtenu par le procédé selon l'invention est donc nettement plus stable à la chaleur que les produits de l'art antérieur puisqu'il permet la production de sucres cuits nettement moins colorés ainsi qu'il résulte du tableau 3.

### f) Température de transition vitreuse et teneur en eau résiduelle.

La température de transition vitreuse (Tg) et la teneur en eau résiduelle des sucres cuits obtenus à l'exemple précédent ont été mesurées et figurent dans le tableau 4 suivant :

**TABLEAU 4**

| | **Produit A*** | | **Produit B*** | | **Produit C*** | | **Produit D** | |
|---|---|---|---|---|---|---|---|---|
| **Température de cuisson** | % eau résiduelle | Tg °C | % eau résiduelle | Tg °C | % eau résiduelle | Tg °C | % eau résiduelle | Tg °C |
| **160 °C** | 3,0 | 40 | 3,1 | 38 | 2,2 | 52 | 2,0 | 54 |
| **200 °C** | 1,3 | 60 | 1,5 | 57 | 1,0 | 69 | 0,8 | 73 |

| | | | | | | | | |
|---|---|---|---|---|---|---|---|---|
| *comparatif | | | | | | | | |

Pour une même teneur en eau résiduelle, la température de transition vitreuse des bonbons obtenus à l'aide du produit obtenu par le procédé selon l'invention est plus élevée, ce qui a pour conséquence une meilleure tenue à la chaleur de ceux-ci en rendant tout phénomène de fluage impossible. En outre, les bonbons obtenus avec le produit obtenu par le procédé selon l'invention sont plus faciles à cuire et à déshydrater, ne colorent pas et ont un goût bien meilleur, le goût sucré du maltitol n'étant altéré par aucune note d'amertume comme c'est le cas pour les autres bonbons.

### g) Hygroscopicité des sucres cuits

On a estimé l'hygroscopicité des bonbons obtenus en e après cuisson à 160°C et 200°C, par mesure de leur reprise en eau dans une atmosphère à 66 % d'humidité relative à 20°C, après 1 et 7 jours. On a obtenu les résultats suivants figurant dans le tableau 5 et indiquant les pourcentages d'augmentation du poids des bonbons.

**TABLEAU 5**

| | | **Produit A** | **Produit B** | **Produit C** | **Produit D** |
|---|---|---|---|---|---|
| **160°C** | **1 j** | 1,65 | 1,80 | 1,06 | 0,95 |
| | **7 j** | 5,02 | 5,62 | 3,20 | 2,80 |
| **200°C** | **1 j** | 1,36 | 1,47 | 1,22 | 1,10 |
| | **7 j** | 4,22 | 4,98 | 3,61 | 3,20 |

Qu'ils soient obtenus par cuisson à 160°C ou à 200°C, les sucres cuits obtenus avec le produit selon l'invention sont toujours moins hygroscopiques que ceux obtenus avec les produits de l'art antérieur

### h) cariogénicité

La cariogénicité des produits A, B, C et D a été testée selon un test mis au point par la Société Demanderesse.

Ce test simple repose sur la détermination in vitro de l'acidification d'une quantité donnée du produit à tester après ensemencement du milieu par de la salive. Il repose sur l'appréciation de la chute du pH au cours du temps d'un bouillon de culture contenant le produit à tester, après ensemencement avec de la salive provenant de plusieurs donneurs, comparativement à un bouillon de culture témoin ne contenant aucun glucide. Il faut souligner que ce test n'est pas suffisant pour caractériser de façon absolue la non-cariogénicité d'un produit, car ses résultats peuvent varier, par exemple, suivant la qualité de la salive utilisée, mais il permet néanmoins d'établir des comparaisons valables entre différents produits.

Le mode opératoire détaillé de ce test est le suivant :

On prépare une série de tubes contenant 10 ml d'un milieu de culture nutritif (milieu trypticase à 2 % de matière sèche) sans glucide à pH 7, et on stérilise ces tubes par passage à l'autoclave à 120°C durant 20 minutes.

Dans une première série de cinq tubes, on introduit 1 ml d'eau stérile pour faire une série témoin.

Dans une deuxième série de cinq tubes, on introduit lml d'une solution à 18 % (P/V) du produit à tester.

Puis on ensemence les cinq tubes de chaque série avec un même volume de 0,2 ml par tube d'une dilution au cinquième de salive humaine obtenue par prélèvement sur cinq donneurs.

On suit alors la formation d'acides par mesure du pH, une première mesure étant effectuée avant incubation et les autres mesures étant effectuées après des incubations à 30°C de respectivement 3, 6, 13, 18 et 21 heures.

Pour qu'un produit puisse être considéré comme non cariogène au sens de ce test, il faut que la différence de pH observée entre le témoin au bout de 21 heures et le produit à tester au bout de 21 heures, ne soit pas trop prononcée et, dans la pratique, au plus égale à 1 unité de pH.

Au sens de ce test, seuls les produits B et D se sont révélés non cariogènes.

Les différences de pH observées au bout de 21 heures sur les quatre produits A, B, C et D étaient respectivement les suivantes :
- produit A ; 2,6
- produit B : 0,8
- produit C : 1,7
- produit D : 0,6

La Société Demanderesse a en outre remarqué que les produits obtenu par le procédé selon l'invention obtenaient des performances d'autant meilleures à ce test qu'ils avaient subi une hydrolyse enzymatique poussée avant les étapes d'hydrogénation et de chromatographie.

### i) Pression osmotique

On a mesuré les poids moléculaires moyens en poids (Mw) et en nombre (Mn) des produits A, B, C et D.

Ceux-ci étaient de :

| | Mw | Mn |
|---|---|---|
| - produit A | 1750 | 750 |
| - produit B | 1700 | 750 |
| - produit C | 2380 | 1120 |
| - produit D | 2500 | 1300 |

Comme la pression osmotique des solutions aqueuses est inversement corrélée au poids moléculaire moyen en nombre (Mn) des produits, on constate que ce sont les produits selon l'invention qui développent la pression osmotique minimale et occasionnent ainsi le moins de problèmes de digestion.

Le faible écart entre le Mw et le Mn des produits selon l'invention démontre aussi l'homogénéité de la taille des molécules composant ces nouveaux produits et les nombreux avantages qui en découlent.

## Revendications

1. Procédé de préparation d'un polymère soluble de glucose, caractérisé par le fait que l'on soumet un polymère de glucose composé majoritairement de liaisons 1-6 à une étape d'hydrogénation puis à une étape de tamisage moléculaire, afin d'éliminer les produits de masse moléculaire inférieure ou égale à 182.

2. Procédé de préparation d'un polymère de glucose selon la revendication 1, caractérisé par le fait que l'étape de tamisage moléculaire est conduite sur membrane ou par chromatographie sur des matériaux adsorbants.

3. Procédé selon l'une des revendications 1 ou 2, caractérisé par le fait que le tamisage moléculaire est effectué par chromatographie sur des adsorbants du type résines cationiques ou sur des zéolithes fortement acides.

4. Procédé selon l'une quelconque des revendications 1 à 3, caractérisé par le fait que l'on soumet, avant les étapes d'hydrogénation et de tamisage moléculaire, le polymère de glucose de départ composé majoritairement de liaisons 1-6 à une hydrolyse à l'aide d'enzymes susceptibles de dégrader les liaisons glucose-glucose.

5. Procédé selon la revendication 4, caractérisé par le fait que l'hydrolyse est effectuée à l'aide d'α-amylase, d'amyloglucosidase, et/ou d'enzyme capable d'hydrolyser les liaisons α 1-6 de l'amidon.

## Patentansprüche

1. Verfahren zur Herstellung eines löslichen Glukosepolymers, gekennzeichnet durch die Tatsache, daß man ein Glukosepolymer, das überwiegend aus 1-6-Verknüpfungen besteht, einem Hydrierungsschritt, dann einem Schritt von molekularem Sieben unterzieht, um die Produkte mit einer Molekülmasse kleiner oder gleich 182 zu entfernen.

2. Verfahren zur Herstellung eines Glukosepolymers gemäß Anspruch 1, gekennzeichnet durch die Tatsache, daß der Schritt von molekularem Sieben über eine Membran oder durch Chromatographie über adsorbierende Materialien ausgeführt wird.

3. Verfahren gemäß einem der Ansprüche 1 oder 2, gekennzeichnet durch die Tatsache, daß das molekulare Sieben durch Chromatographie über Adsorptionsmittel vom Typ kationische Harze oder über stark saure Zeolithe ausgeführt wird.

4. Verfahren gemäß einem der Ansprüche 1 bis 3, gekennzeichnet durch die Tatsache, daß man das Glukosepolymer, das überwiegend aus 1-6-Verknüpfungen besteht, vor den Schritten von Hydrierung und von molekularem Sieben einer Hydroiyse mit Hilfe von Enzymen, die zum Abbau der Glukose-Glukose-Verknüpfungen geeignet sind, unterzieht.

5. Verfahren gemäß Anspruch 4, gekennzeichnet durch die Tatsache, daß die Hydrolyse mit Hilfe von α-Amylase, Amyloglucosidase und/oder Enzym, das die α-1-6-Verknüpfungen der Stärke hydrolysieren kann, ausgeführt wird.

## Claims

1. Process for preparing a soluble glucose polymer, characterized in that a glucose polymer predominantly composed of 1-6 bonds is subjected to a hydrogenation stage and to a molecular sieving stage, so as to remove the products of molecular mass less than or equal to 182.

2. Process for preparing a glucose polymer according to claim 1, characterized in that the molecular sieving stage is performed on membrane or by chromatography on adsorbent materials.

3. Process according to claim 1 or 2, characterized in that the molecular sieving is performed by chromatography on adsorbent materials of the type of cationic resins or on strongly acidic zeolites.

4. Process according to any one of claims 1 to 3, characterized in that before the hydrogenation and molecular sieving stages, the starting glucose polymer predominantly composed of 1-6 bonds is subjected to a hydrolysis by means of enzymes capable of degrading the glucose-glucose bonds.

5. Process according to claim 4, characterized in that the hydrolysis is performed by means of α-amylase, amyloglucosidase, and/or enzyme capable of hydrolyzing the α 1-6 bonds of starch.
